# EUROPEAN PATENT APPLICATION

(11) **EP 4 546 828 A1**
(43) Date of publication of application: **30.04.2025**
(21) Application number: 24206935.9
(22) Date of filing: 16.10.2024
(51) Int. Cl.: H04W 4/42, H04W 4/48, H04W 60/00, H04W 12/50, H04W 4/80, H04W 84/12, H04W 60/06

(54) **PASSENGER DEVICE PAIRING VIA WIRELESS CHARGING PAD**

(30) Priority: 16.10.2023 US 202363590770 P; 15.10.2024 US 202418916601
(71) Applicant: Panasonic Avionics Corporation, Irvine, CA 92612 (US)
(72) Inventor: PATEL, Dharmesh, Irvine, 92612 (US); WATSON, Philip, Irvine, 92612 (US)
(74) Representative: Barker Brettell LLP

(57) **Abstract**

A method of pairing a passenger electronic device (PED) and an inflight entertainment and communication (IFEC) network includes detecting a placement of the PED in a wireless charging platform onboard a commercial passenger vehicle; communicating, upon the detecting the placement, a first pairing information between the PED and the IFEC network via a first communication link; and using the first pairing information to facilitate communication between the PED and the IFEC network via a second communication link.

## Description

### CROSS-REFERENCE TO RELATED APPLICATIONS

This application claims priority to, and the benefit of, U.S. Provisional Application No. 63/590,770, titled PASSENGER DEVICE PAIRING VIA WIRELESS CHARGING PAD and filed on October 16, 2023, and U.S. Patent Application No. 18/916,601, titled PASSENGER DEVICE PAIRING VIA WIRELESS CHARGING PAD and filed on October 15, 2024. The aforementioned application is herein incorporated in its entirety, including any drawings and appendices.

### TECHNICAL FIELD

This document is generally related to systems, methods, and apparatus for providing communication connectivity on a commercial passenger vehicle.

### BACKGROUND

Most modern commercial passenger vehicles include communication and display electronics, commonly referred to as in-flight entertainment and communication (IFEC) equipment.

### SUMMARY

This patent document describes, among other things, various implementations for providing a pairing between a passenger electronic device (PED) and the IFEC based on PED interaction with wireless charging platform.

In one aspect, a method of pairing a PED with the IFEC is disclosed the method includes detecting a placement of the PED in a charging platform onboard a commercial passenger vehicle; communicating, upon the detecting the placement, a first pairing information between the PED and the IFEC network via a first communication link; and using the first pairing information to facilitate communication between the PED and the IFEC network via a second communication link.

In another aspect, an apparatus for establishing a secure connection between a user device and an inflight server is disclosed. The apparatus includes a charging platform configured to establish a first network connection with a PED; and a second network connection. The apparatus is configured to: detect a placement of a PED on the charging platform; communicate, upon the detecting the placement, a first pairing information between the PED and the inflight network via a first communication link; and use the first pairing information to facilitate communication between the PED and the IFEC network via a second communication link.

The above and other aspects and their implementations are described in greater detail throughout the present document.

### BRIEF DESCRIPTION OF THE DRAWINGS

FIG. 1 shows an example of an in-flight entertainment (IFE) system installed in an airplane based on some implementations of the disclosed technology.
FIG. 2 is a flowchart of an example method of providing flexible displays on a commercial passenger vehicle.
FIG. 3 is a block diagram depicting a system in which a secure pairing is performed between a PED and a network.

### DETAILED DESCRIPTION

The present document discloses techniques that allow use of a wireless charging pad for establishing a secure connection between a passenger's electronic device (PED) and an in-flight entertainment and communication (IFEC) network in an airplane. Although the various embodiments are described with reference to airplane electronics, it will be understood that the techniques may similarly be implemented in other commercial passenger vehicles.

In the last few years, some new techniques have come up for being able to for a pairing between a PED and a computer onboard an airplane. This pairing may be performed based on a handshake that may use a QR code or a personal code (PIN code) or some type of information printed on a boarding pass that the user enters on a menu screen on a user device or on a seatback display.

All these methods require active participation by a user and/or a user having to touch surfaces in the airplane.

The techniques provided in the present document solve the above-discussed challenges, and other problems. For example, in one aspect, the disclosed techniques allow a pairing between a PED and the computer without the passenger having to perform any active data entering or QR code scanning. Furthermore, no surface touching by passenger fingers is needed. In some embodiments, when a passenger places a PED on a wireless charging platform, some amount of credential data is exchanged to establish a secure connection between the PED and the inflight network. Once the pairing is performed, data communication may be carried through conventional networks such as onboard Wi-Fi networks. Alternatively, or in addition, charging electronics may also be used for data communication.

These, and other, technical solutions are disclosed in the present document.

### 1. Examples of commercial passenger vehicle systems

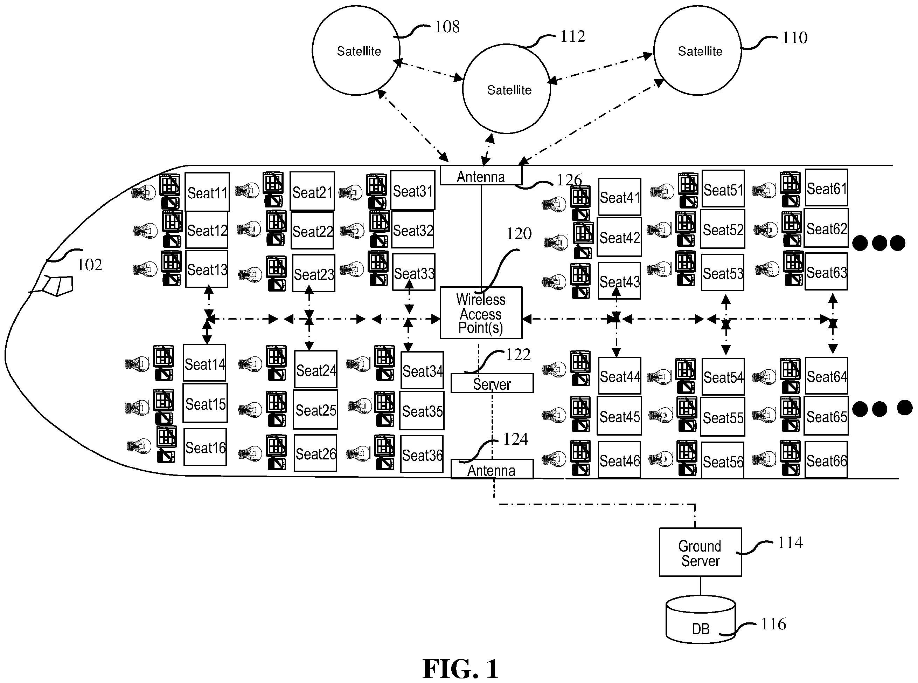

FIG. 1 shows an example of an in-flight entertainment (IFE) system installed in an airplane 102. The IFE system provides various entertainment and connectivity services to passengers on board. Referring to FIG. 1, the IFE system includes a server 122, antenna 126, and antenna 124. The components shown as a single element in FIG. 1 (e.g., the server 122, the wireless access point 120, etc.) can be configured in multiple elements. For example, the in-flight service system can include multiple wireless access points to facilitate or support providing wireless coverages for the passengers. The passengers carry their own devices, which include the passenger electronic devices, or PEDs, (illustrated by the light bulb icon in FIG. 1) and other wireless electronic devices. The PEDs may refer to any electronic computing device that includes one or more processors or circuitries for implementing the functions related to data storage, video and audio streaming, wired communications, wireless communications, etc. The examples of the PEDs include cellular phones, smart phones, tablet computers, laptop computers, and other portable computing devices. In the implementations of the disclosed technology, the PEDs may have the capability to execute application software programs ("apps") to perform various functions.

In FIG. 1, the airplane 102 is depicted to include multiple passenger seats, Seat11 to Seat 66. The media playback devices (illustrated by screen icon), are provided at each passenger seat and configured with capabilities for video and audio streaming, Internet communications, and other capabilities. In some implementations, the media playback devices are provided at each passenger seat, such as located at each of the seatbacks of the passenger seats, and/or on cabin walls and/or deployable from an armrest for seats located at a bulkhead (i.e., in the first row of a section). The media playback devices have displays providing interfaces to each passenger through which each passenger enters his or her selections on the entertainment option, e.g., the particular selections, emergency requests, etc. Upon receiving the selection from the passengers, based on the selections from the passengers, the media playback device displays entertainment content and travel information. In the implementations of the disclosed technology, the media playback devices can operate in a check-in mode which is separate from an entertain mode that receives the selections on the entertainment options from passengers and provides corresponding entertainment content. The media playback devices can operate in the check-in mode until the passengers complete the onboard check-in process after getting on board and operate in the entertain mode after the passengers complete the onboard check-in. To encourage the passengers to complete the onboard check-in process, various graphic user interface (GUI) functions can be suggested and displayed on the media playback devices. More details will be further discussed later in this document.

The server 122 is communicably coupled with media playback devices and the PEDs and perform various operations including processing requests/inputs from passengers and providing data to passengers. The communications between the server 122 and the passengers' onboard devices including the media playback devices and the PEDs are either realized by wired connections or wireless connections. In some implementations, the communication among the server 122, the media playback devices, and the PEDs are achieved through the antenna 124 to and from the ground-based cell towers by, for example, a provision of network plugs at the seat for plugging PEDs to a wired onboard local area network. In some other implementations, the communications among the server 122, the media playback devices, and the PEDs are achieved through the antenna 126 to and from satellites 108, 110, 112 in an orbit (e.g., via a cellular network utilizing one or more onboard base station(s), Wi-Fi utilizing the wireless access point 120, and/or Bluetooth).

In some implementations, a crew terminal is provided in the airplane 102 utilized by a ground crew, a cabin crew, or a flight crew to access the IFE maintenance functions such as loading new content, replenishing multimedia content digital rights management (DRM) keys, and so on. The crew terminal is in communication with other devices of the IFE system such as the server 122, media playback devices, the PEDs, and the ground server and operates to support the passenger tracking techniques as suggested in this patent document. In some implementations, the crew terminal can be implemented as a part of the server 122. In some implementations, the crew terminal is in communication with the gate terminal to facilitate the boarding process. In some implementations, the gate terminal and the onboard crew terminal store apps to support the boarding process. For example, the applications may store instructions to start, proceed, stop, and finish the boarding process by detecting certain conditions. The gate terminal and the crew terminal are typically accessed by a gate agent or a crew member responsible for overseeing boarding operation. User ID and passwords may be required to authorize the access to the gate terminal and the onboard crew terminal to facilitate identifying of the agent or crew member conducting the boarding operation and to prevent unauthorized access to the system.

The server 122, the media playback devices, and the PEDs form a local network on board the airplane 102 through an onboard router (not shown). The server 122 is also communicably coupled with the ground server 114 through the antenna 126 for receiving and transmitting information from/to the ground server 114. The ground server 114 can be located at various locations, including a gate where passengers check-in the boarding pass right before passengers are on board, a computer center at an arbitrary location on the ground, etc. In some examples, the gate terminal may correspond to the ground server 114 located at the gate and thus can be one example of the ground server 114. The ground server 114 may be in communication with the database 116 and provide information from the database 116 to the server 122 and store information received from the server 122 in the database 116. Although FIG. 1 shows that the database 116 is provided separately from the ground server 114, the database 116 can be provided as a part of the ground server 114.

Although not shown in FIG. 1, the IFE system may further include a database which stores passenger information, for example, profiles of the passengers (name, age, etc.), preferred entertainment options (movies, music, shows, etc.), preferred entertainment content (e.g., genres of movies), etc. The passenger information can be obtained in multiple manners and is stored in the database of the IFE system. In some implementations, the passenger information is obtained prior to the passengers coming on board (e.g., at the time of purchasing the tickets or checking in for the flights), or at other times. In some implementations, the passenger information can be obtained and shared by an association of several airplane companies and retrieved from the database 116. In some implementations, the passenger information can be updated during the trip. One such database may include configuration (make/model) of various seats installed on the airplane. This database may be used by an installer to adapt a curved screen to the backside of a seat.

### 2. Example embodiments

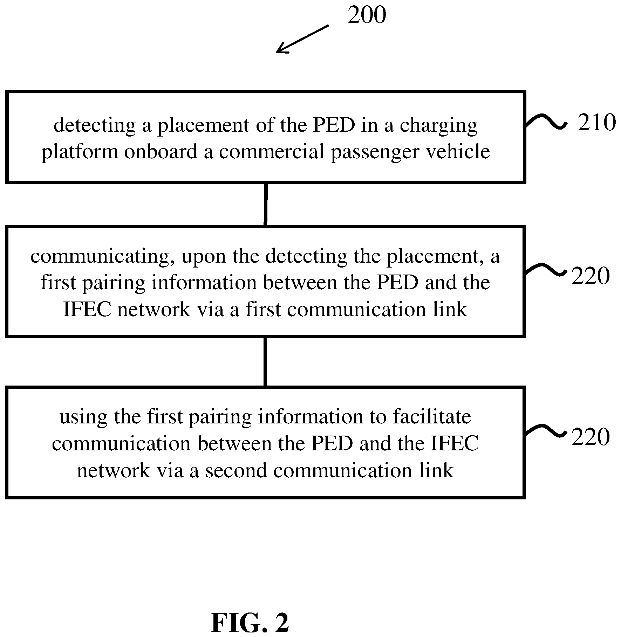

Some preferred embodiments may use the following example techniques.
1. A method of pairing a passenger electronic device (PED) and an inflight entertainment and communication (IFEC) network (e.g., method 200 depicted in FIG. 2), comprising: detecting (202) a placement of the PED in a charging platform onboard a commercial passenger vehicle; communicating (204), upon the detecting the placement, a first pairing information between the PED and the IFEC network via a first communication link; and using (206) the first pairing information to facilitate communication between the PED and the IFEC network via a second communication link.

In some embodiments, the placement of the PED may require a physical connection between the PED and the charging platform. In some embodiments, "placement" may refer to the PED being sufficiently near the charging platform to allow wireless charging and/or short range communication to be able to take place between the PED and the charging platform.

In some embodiments, the "detecting" may be performed by measuring an electromagnetic field near the charging platform and detection an impedance change. In some embodiments, the detecting may be perform using a capacitive load measurement. In some embodiments, the detecting may be performed based on a physical connection such as a plugging in or a weight on a surface event.

In some embodiments, the communicating the first pairing information via the first communication link may be performed using a pre-specified protocol in which the unique identifier that identifies the PED (and thereby identifies the passenger who is using the PED) or identifies a wireless access point (WAP). For example, when the communication comes from the WAP, the communication of a unique identifier of the WAP will identify that the PED is within coverage of an inflight Wi-Fi network.

The exchange of the pairing information allows the IFEC to ascertain that the PED is a device that is authorized to perform some communication or access to onboard services and also identifies the passenger using the PED. Thus, a secure communication may be established with none to minimal explicit user selection or typing of Wi-Fi or Bluetooth passwords and such. Furthermore, the placement of the PED will also ensure that the PED is in physical proximity of a seatback using which a passenger may be provided certain dialogue or menus by the system.

2. The method of example 1, wherein the charging platform comprises a Qi wireless charging platform. Alternatively, wireless charging platform that may be a proprietary platform (e.g., MagSafe platform by Apple) may be used. Here, Qi refers to a wireless charging protocol specified by Qi consortium and available at wirelesspowerconsortium.com website.

3. The method of example 1, wherein the charging platform is a universal serial bus (USB) charging platform. For example, USB-C coupling that provides power may be used. In such cases, the IFEC network may also provide data over power line (DOPL) type support.

4. The method of any of above examples, wherein the first communication link comprises a low bandwidth communication over the charging platform. In some cases, the communication bandwidth may comprise Qi data transmission or a near field communication bandwidth (NFC). A typical example of such a bandwidth may be around 400Kb/sec speed. In some configurations, the charging platform may be based on Qi transmission coils with NFC coils near or surrounding the wireless charging coils.

5. The method of any of above examples, wherein the second communication link comprises an inflight wireless link. Various examples of such a link include Wi-Fi or Bluetooth wireless link that facilitate data communication.

6. The method of any of above examples, further including disconnecting, upon detecting a break in the placement, at least a portion of the communication via the second communication link. For example, when a passenger picks up the PED off the wireless charging platform, a break in the trusted relationship may be noted by the IFEC network and any secure or sensitive data communication (e.g., financial transactions or access to premium content) may be severed. At this time, the passenger may be required to perform additional actions to maintain or re-establish the secure connection. Other examples wherein the disconnecting may be executed include operational status of the commercial passenger vehicle. For example, when an airplane lands, the trusted relationship with PED may be ended. Another example may be that the pairing, or the trusted relationship, may be ended when the passenger moves between different access points or different locations (e.g., business class, first class, toilet, etc.) within the airplane.

7. The method of any of above examples, wherein the first pairing information comprises a unique identifier of the PED or an identification of a wireless access point. In some embodiments, the unique identifier may be provided to the PED by the IFEC, e.g., through an app installed on the PED such as an airlines app.

8. The method of any of above examples, wherein the first communication link is a near field communication (NFC) link and wherein the second communication link is a wireless local area communication (WLAN) link.

9. A system for secure pairing between a passenger electronic device (PED) and an inflight network, comprising: a charging platform configured to establish a first network connection with a PED; and a second network connection. The system is configured to: detect a placement of a PED on the charging platform; communicate, upon the detecting the placement, a first pairing information between the PED and the inflight network via a first communication link; and use the first pairing information to facilitate communication between the PED and the IFEC network via a second communication link. The system may include at least one processor and a network interface configured to perform the steps of detection and communication.

10. The system of claim 9, further configured to implement method of examples 2-8. For example, the system may include a server in the IFEC network that maintains relationships between specific wireless charging pads or USB charging outlets and corresponding seats associated with these chargers. Accordingly, upon placement of a PED, the PED will be paired with a corresponding seat and seatback display. In some embodiments, the charging platform comprises a Qi wireless charging platform. In some embodiments, the charging platform is a universal serial bus (USB) charging platform. In some embodiments, the first communication link comprises a low bandwidth communication over the charging platform. In some embodiments, the second communication link comprises an inflight wireless link (or vice versa). In some embodiments, the method includes disconnecting, upon detecting a break in the placement, at least a portion of the communication via the second communication link. In some embodiments, the method includes disconnecting the pairing upon occurrence of an event of a commercial passenger vehicle. In some embodiments, the first communication link is a near field communication (NFC) link and wherein the second communication link is a wireless local area communication (WLAN) link. In some embodiments, wherein the using the first pairing information to facilitate communication between the PED and the inflight network via a second communication link comprises requesting a user confirmation to establish the second communication link. In some embodiments, the using the first pairing information to facilitate communication between the PED and the inflight network via a second communication link comprises establishing the second communication link in absence of a user input.

One example embodiment using Qi wireless charging platform may use only the Qi data exchange. Such an embodiment may have a passenger seat charger transmit the required identifier(s) to PED such as a phone. An app on the phone (e.g., the Companion App of an airline) receives the Qi data and uses that to pair with the IFE seat. In other words, the passenger is not needed to enter a PIN number or scan a QR code over existing Wi-Fi channels. In one advantageous aspect, this operation is automatic and transparent to the user, with the companion app running on the device. This pairing may be automatically triggered when the passenger places PED on the charger (e.g., insert a USB or a lightening wire connection to the PED).

The communication link may be used to transmit the Wi-Fi service set identifier (SSID) in the same way so that users whose device has not ever paired with that airline's passenger SSID could do so (with user-granted permission). In some embodiments, a user's PED may pop up a dialog box like "would you like to pair your phone with your seat? This app is requesting to connect to 'Inflight' wireless network" and so on.

In alternate or additional embodiments, plugging into a USB port that includes a data line connected to the passenger IFE seat electronics, could do the same operation as above. In some embodiments, charge ports connected to independent in-seat power supply systems would not work the same way, both for wired and wireless charging because there may not be any associated pairing information for these separately operating charge ports.

### 3. Example of secure communication

In some embodiments, the first communication link may be secured to allow private transfer of data that may be sensitive in nature.

In a basic mode, instead of typing in the pairing code on the PED, the code may be sent over the charging connection such as Qi data transfer. Because it is not user-entered, the pairing code longer than typical (4-6 digits) for added security. For example, the pairing code may be 16, 32 or 64 bits wide. Additional security may be obtained through hashed tokens.

In some enhanced modes, The Wi-Fi SSID (service set identifier) may be transmitted over the charging connection and have phone auto-associate to that SSID (using OS permission) and then auto-pair using the transmitted pairing code. In some embodiments, the same may be achieved over wired USB. In one aspect, the data security may rely on the proximity constraints of NFC or Qi communication. Because it is severely limited range (centimeters) adding additional encryption layers may not always be used.

In some security modes, the Wi-Fi connection between a PED and the airplane IFEC may be used as an indication that the PED is still inside the airplane and therefore is paired with the IFEC. For example, a periodic signal may be communicated between (either solicited or unsolicited) the PED and the airplane Wi-Fi network, whose non-reception may be considered as an event for discontinuing the pairing. For example, when a passenger leaves the airplane, such as event of discontinuation may occur.

### 4. An example system

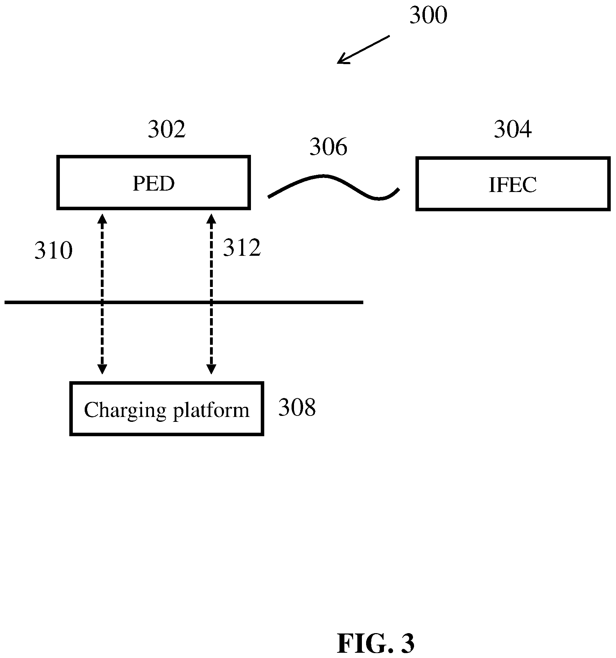

FIG. 3 shows an example system 300 in which a secure pairing may be implemented. A PED 302 may be brough near a charging platform 308 to establish a wired or wireless charging connection 310. The connection 310 may be one-way or two-way connection. Upon establishing the connection 310, this may facilitate a first communication link 312. In some cases, the first communication link 312 may be a part of the wired or wireless connection 310. Based on the data exchanged between the PED 302 and the charging platform 308, communication between the PED 301 and an IFEC 304 may be facilitated using a second communication link 306. The second communication link 306 may be a wired link or a wireless link such as a Wi-Fi or another wireless local area network (WLAN) technology link.

### 5. Example use cases

In one example use case, a trusted app may be installed on the PED. This app may be app provided by an airlines, or may be a third party or a banking app. A unique identifier may be provided to the app either a priori or during check-in process. Upon boarding a flight, the passenger may place the PED on a charging platform near her seat. The placement of PED may trigger an exchange of the unique identifier from the PED to the IFEC through a communication with the charging platform. Once the IFEC is able to validate the unique identifier, which identifies the passenger, the passenger may be prompted via a seatback display for permission to pair the PED to the in-flight network. For example, the unique identifier may be used to obtain the passenger's name and the prompt may be customized such as "Hello Mr. X, would you like to pair with the network?). Alternatively, pairing may be performed automatically. Once the PED has paired with IFEC, a broadband connection such as Wi-Fi may be automatically established for the PED. This way, the passenger user is able to receive Wi-Fi signals without having to perform any (or minimal) interactive tasks.

In another example use case, PED may have multiple network interfaces, such as Bluetooth, cellular or Wi-Fi interface for data communication. One of these interfaces may be used for outbound data from the PED (e.g., from cellular or Wi-Fi to a server) and another interface may be used for inbound data to the PED (e.g., Bluetooth or in-flight Wi-Fi or Qi wireless interface), or vice versa. In one advantageous aspect, because two different physical interfaces are used for maintaining a trusted pairing between the PED and IFEC, the differences in geographic reach of these connections are used to check integrity and continuity of these connections. For example, a same unique identifier should not be reported from two different PEDs within a same cellular region.

### 6. Concluding Remarks

It will be appreciated by those of skill in the art that techniques are described to allow a PED to be automatically connected to the IFEC network by receiving information and/or credentials required to establish a connection with the IFEC WLAN network. Here, the user may not need to do anything more than simply place a PED on a wireless charging platform or couple the PED to a wired charger such as a user port.

It will further be appreciated that the security offered by wireless charging connection due to physical proximity requirements may also be used for secure data communication including pairing with a particular seat, carrying remote control function control information from the seat to the IFEC network and so on.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this patent document.

## Claims

1. A method of pairing a passenger electronic device (PED) and an inflight entertainment and communication (IFEC) network, comprising:
detecting a placement of the PED in a charging platform onboard a commercial passenger vehicle;
communicating, upon the detecting the placement, a first pairing information between the PED and the IFEC network via a first communication link, wherein the first pairing information comprises a unique identifier of the PED or an identification of a wireless access point; and
using the first pairing information to facilitate communication between the PED and the IFEC network via a second communication link.

2. The method of claim 1, wherein the charging platform comprises a Qi wireless charging platform or a universal serial bus (USB) charging platform.

3. The method of claim 1, wherein the first communication link comprises a low bandwidth communication over the charging platform or the second communication link comprises an inflight wireless link.

4. The method of claim 1, further including
disconnecting, upon detecting a break in the placement, at least a portion of the communication via the second communication link.

5. The method of claim 1, further including:
disconnecting the pairing upon occurrence of an event of the commercial passenger vehicle.

6. The method of claim 1, wherein the first communication link is a near field communication (NFC) link and wherein the second communication link is a wireless local area communication (WLAN) link.

7. The method of claim 1, wherein the using the first pairing information to facilitate communication between the PED and the IFEC network via a second communication link comprises:
requesting a user confirmation to establish the second communication link.

8. The method of claim 1, wherein the using the first pairing information to facilitate communication between the PED and the IFEC network via a second communication link comprises:
establishing the second communication link in absence of a user input.

9. A system for secure pairing between a passenger electronic device (PED) and an inflight network, comprising:
a charging platform configured to establish a first network connection with a PED; and
a second network connection;
wherein the system is configured to perform a method comprising:
detecting a placement of a PED on the charging platform;
communicating, upon the detecting the placement, a first pairing information between the PED and the inflight network via a first communication link; and
using the first pairing information to facilitate communication between the PED and the inflight network via a second communication link.

10. The system of claim 9, wherein the charging platform comprises a Qi wireless charging platform or a universal serial bus (USB) charging platform.

11. The system of claim 9, wherein:
the first communication link comprises a low bandwidth communication over the charging platform and the second communication link comprises an inflight wireless link; or
the first communication link is a near field communication (NFC) link and wherein the second communication link is a wireless local area communication (WLAN) link.

12. The system of claim 9, wherein the method further includes:
disconnecting, upon detecting a break in the placement, at least a portion of the communication via the second communication link.

13. The system of claim 9, wherein the system is further configured to perform:
disconnecting the pairing upon occurrence of an event of a commercial passenger vehicle.

14. The system of claim 9, wherein the using the first pairing information to facilitate communication between the PED and the inflight network via a second communication link comprises:
requesting a user confirmation to establish the second communication link.

15. The system of claim 9, wherein the using the first pairing information to facilitate communication between the PED and the inflight network via a second communication link comprises:
establishing the second communication link in absence of a user input.
